(19) Europäisches Patentamt
European Patent Office
Office européen des brevets

(11) **EP 3 104 094 B1**

(12) **EUROPEAN PATENT SPECIFICATION**

(45) Date of publication and mention
of the grant of the patent:
**16.12.2020 Bulletin 2020/51**

(51) Int Cl.:
*H02P 6/06* *(2006.01)*        *F04D 27/00* *(2006.01)*
*F24F 11/77* *(2018.01)*       *H02P 6/28* *(2016.01)*

(21) Application number: **14881059.1**

(22) Date of filing: **28.01.2014**

(86) International application number:
**PCT/CN2014/071723**

(87) International publication number:
**WO 2015/113237 (06.08.2015 Gazette 2015/31)**

(54) **METHOD FOR PROVIDING CONSTANT AIRFLOW WITH A VARIABLE SPEED MOTOR AND APPARATUS COMPRISING A VARIABLE SPEED MOTOR AND A MOTOR CONTROLLER APPLYING SAME METHOD**

VERFAHREN ZUR BEREITSTELLUNG EINES KONSTANTEN LUFTSTROMS MIT EINEM MOTOR MIT VARIABLER GESCHWINDIGKEIT UND EINER VORRICHTUNG, DIE EINEM MOTOR MIT VARIABLER GESCHWINDIGKEIT UND EINE MOTORSTEUERUNG ENTHÄLT, DER DIE GLEICHE METHODE ANWENDET

PROCÉDÉ POUR FOURNIR UN FLUX D'AIR CONSTANT AVEC UN MOTEUR A VITESSE VARIABLE ET UN APPAREIL COMPRENANT UN MOTEUR A VITESSE VARIABLE ET UN CONTROLEUR DE MOTEUR APPLIQUANT LE MEME PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.12.2016 Bulletin 2016/50**

(73) Proprietor: **Zhongshan Broad-Ocean Motor Co., Ltd.**
**Guangdong 528400 (CN)**

(72) Inventors:
• **ZHANG, Zheng**
**Zhongshan**
**Guangdong528400 (CN)**
• **WANG, Jizhong**
**Zhongshan**
**Guangdong 528400 (CN)**
• **ZHOU, Yiqiao**
**Zhongshan**
**Guangdong 528400 (CN)**
• **ZHAO, Yong**
**Zhongshan**
**Guangdong 528400 (CN)**

(74) Representative: **J A Kemp LLP**
**14 South Square**
**Gray's Inn**
**London WC1R 5JJ (GB)**

(56) References cited:
**EP-A1- 2 128 977        CN-A- 102 748 843**
**CN-U- 202 550 949       JP-A- 2006 003 015**
**JP-A- 2009 195 065       JP-A- 2013 104 578**
**US-A- 5 447 414**

## Description

## Technical Field

The present invention relates to a constant airflow control method for a variable speed motor, and an apparatus comprising a variable speed motor and a motor controller using the same.

## Background of the Invention

PM motors, short for DC brushless permanent magnet synchronous motors, may also be referred to as ECM motors. Due to different service environments, a PM motor has different control modes generally including constant rotation speed control, constant torque control, constant airflow control and the like. The constant airflow control is a common mode in HVACs (heating ventilation systems).

In an indoor ventilation pipe of a household air conditioner, the static pressure often changes as time goes on, for example, due to dust deposition in the pipe or filter blocked. Due to different installations of a pipe, the static pressure is often higher than the standard static pressure of a nominal system of a manufacturer's laboratory. The constant airflow control may provide a constant airflow for users in these conditions, thereby maintaining a comfort effect of ventilation, refrigeration or heating under a wide range of static pressure, and making the operation of a system efficient and energy saving.

A general constant airflow control method is directly mounting an airflow meter. This not only increases cost, but also brings about potential control failure due to airflow failure. Current air conditioner manufacturers generally use a constant airflow control method without airflow meters. Sometimes, it is required to monitor the change of static pressure to regulate speed. Some calculation formulas involve logarithmic computation or high-order polynomials, so the MCU of a motor controller is required to have a powerful computing capability, thus the cost is further increased.

US Patent No. US4806833 discloses that the rotation speed of a motor is changed with respect to external static pressure to acquire constant airflow. The change of the external static pressure is calculated according to the change of the rotation speed sensed by a build-in rotation speed meter of the motor. The airflow calculation is controlled by a function of torque and rotation speed. US Patent No. US5736823a has also disclosed a constant airflow control method, which is also controlled by a function of torque and rotation speed. JP-2009/195065 discloses a power calculation device that highly accurately calculates motor power, an air-conditioning device equipped with the same, and a power calculation method. JP-2013/104578 discloses a VAV type air conditioning system in which static pressure can be constantly controlled without adding a static pressure sensor and accessories. EP 2128977 discloses a motor control device that controls a fan motor to maintain a predetermined airflow value.

The above constant airflow control methods use torque as a key control variable and have the following technical problems:

1) torque is a mechanical variable, which is difficult to be determined and calculated and thus will influence the control accuracy;
2) the torque control is mostly used in the applications of dynamic control, but the constant airflow control is a typically steady state control, so the torque control is not very applicable;
3) the torque control is relatively complicated in the motor control, and the best example is vector control for realizing better torque control; however, the accuracy of the system torque control is constricted by the cost of system hardware and software; and
4) torque is not a characteristic parameter which allows consumers and government to manage and understand the operation of a system.

In other words: torque is a mechanical variable which is difficult to be directly determined; utilizing torque as variable control for realizing constant airflow control will result in complicated operation and high cost; moreover, torque is difficultly associated with energy-saving and environmental management and standards advocated by government and is not intuitive.

## Summary of the Invention

An object of the present invention is to provide a method for providing constant airflow with a variable speed motor and an apparatus comprising a variable speed motor and a motor controller using the same. The present invention is particularly suitable for airflow control at a steady state, has simple algorithm, low requirements for CPU operation, low cost and high control accuracy, and is advantageous for the control of energy conservation and emission reduction.

The object of the present invention is achieved as defined in the independent claims 1 and 10. Preferred embodiments are described in the dependent claims.

Compared with the prior art, the present invention has the following effects: 1) by acquiring a function P=f(n) corresponding to several input target airflow values $CFM_{set}$ by experiments, calculating the calculated value Pt of the corresponding motor input power through the function P=f(n) according to the rotation speed n of the motor, detecting the real-time bus current $I_{bus}$ or phase current and the real-time bus voltage $V_{bus}$, calculating currents $|\alpha$ and $|\beta$ and voltages $V\alpha$ and $V\beta$ on vector $\alpha$-$\beta$ coordinates, calculating the real-time input power Pi of the motor, and comparing the calculated value Pt of the motor input power with the real-time input power Pi of the motor to perform closed loop control, it is particularly suitable for the constant airflow control at a steady state and has high accuracy and low cost; 2) the constant airflow of the present invention is to directly control the input power of the motor, the motor input power is an electrical variable and can be determined easily and accurately; the motor input power may be obtained from DC bus voltage, DC bus current or phase current having higher accuracy; the direct power control is suitable for steady-state control of the system; and the airflow control itself is a typical steady state control issue, and so the system is more accurate and stable by matching the direct power control with the airflow control; the direct power control is realized by motor speed control, and so it has high accuracy and low cost; and 3) the real-time input power Pi of the motor can be processed by a low-pass digital filer, and so the accuracy of calculation is higher and the cost is lower.

## Brief Description of the Drawings

Fig. 1 is a structural schematic view of a conventional air-conditioning fan system;
Fig. 2 is an installation schematic view of a PM motor according to an embodiment of the present invention;
Fig. 3 is a 3D diagram of a PM motor according to an embodiment of the present invention;
Fig. 4 is a 3D diagram of a motor controller of a PM motor according to an embodiment of the present invention;
Fig. 5 is a sectional view of a PM motor according to an embodiment of the present invention;
Fig. 6 is a block diagram of an implementation circuit of motor controller of a PM motor according to Embodiment 1 of the present invention;
Fig. 7 is a corresponding circuit diagram of Fig. 6;
Fig. 8 is a flowchart of a constant airflow control method according to Embodiment 1 of the present invention;
Fig. 9 is a group of constant airflow fitting curves determined by experiments according to the present invention;
Fig. 10 is a fitting curve of experimental data of direct power controlled constant airflow of a 1/3HP PM motor according to the present invention;
Fig. 11 is a fitting curve of any input airflow experimental data solved by an interpolation method according to an embodiment of the present invention;
Fig. 12 is a control logic diagram of a constant airflow control method according to Embodiment 1 of the present invention;
Fig. 13 is a schematic diagram of a control process of a constant airflow control method according to Embodiment 1 of the present invention;
Fig. 14 is a schematic diagram of another control process of a constant airflow control method according to Embodiment 1 of the present invention;
Fig. 15 is a diagram showing experimentally verified test results of a constant airflow control method according to Embodiment 1 of the present invention;
Fig. 16 is a block diagram of an implementation circuit of a motor controller of a PM motor according to Embodiment 2 of the present invention;
Fig. 17 is a corresponding circuit diagram of Fig. 12;
Fig. 18 is a schematic diagram of a conventionally typical PM motor vector control;
Fig. 19 is a relational graph of respective coordinate system of a conventionally typical PM motor vector control; and
Fig. 20 is a control logic diagram of a constant airflow control method according to Embodiment 2 of the present invention.

## Detailed Description of the Invention

The present invention will be described as below in details with reference to specific embodiments and accompanying drawings.

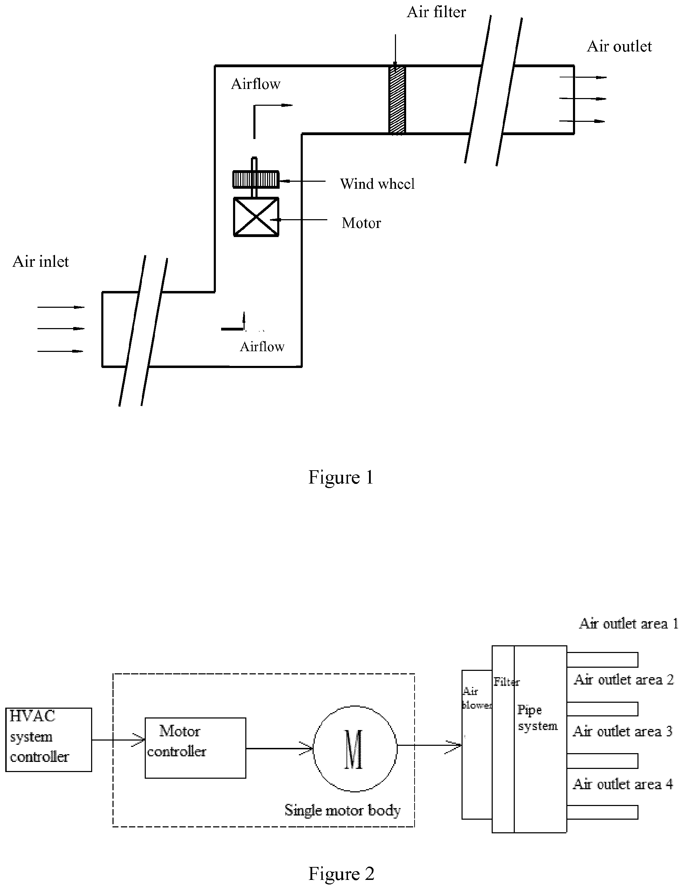

In the present disclosure as shown in Fig. 1, a blower system (such as a gas furnace or an air handler) is mounted in a typical air-conditioning ventilation pipe. The blower system is replaced with "motor + wind wheel" in the figure. The pipe is also provided therein with an air filter. When the motor is started, the blower system begins to below air. As the number of air outlets and the number of air inlets are related to the number of rooms, there is no universal standard for the design of the pipe. Meanwhile, the filter may also have different pressure drops, and so the actual airflow of the blower system carried with a conventional single-phase AC motor (PSC motor) in different pipes will be different. As shown in Fig. 2, 1) the control of a product is a HVAC controller, which controls all product operating devices and sets up information to send to a PM motor controller by means of the peripheral circuit of a customized interface and protocol. 2) The motor controller includes a microprocessor (a single chip or DSP electronic plate) for motor control. The motor controller is provided with a power supply portion for providing power to each circuit of the controller. The power supply has DC bus voltage and current. Therefore, the control of the motor will perform power transmission. Low-cost and mass-produced motor controllers usually use parallel resistance circuits as current and voltage sensing hardware and as system feedback to control motor drivers to execute motor control, for example, vector control, direct torque control, and other types of sensor control or non-sensor control. It is well known that the change of the operating period of any electronic component is a reason for influencing detection accuracy and persistence. 3) The rotor of a PM motor is provided thereon with magnets and structures and there are multi-phase winding at the stator side or slot. When temperature varies, permanent magnet and winding resistances will changes and so it is possible to result in different changes of motor control. Usually, during manufacturing motors, a certain degree of changes will also be generated. Aging of a motor, a new motor and an old motor, are factors of control accuracy and persistence. In the life time, the magnetic flux of magnet of motor will be demagnetized due to temperature change. In addition, potential risks of motor shaft failure and the safety of a system should be detected or monitored in real time. 4) Air blower: the air blower is mounted on a motor shaft, and the air flow generated by rotation is at a certain speed. The position mounted may influence operation, resulting in increased friction, low flow volume and even wrong rotating direction. 5) Filter: the filter should be replaced and maintained at regular intervals. However, it is possible to fail to trace for a long time. This will increase friction and further influence air flow pressure. 6) Pipe control: the pipe system is likely to be changed. Dust, pipe rupture, region control and switching on/off air ports are system pressure change. According to the above actual conditions, it will cause many unstable factors if constant airflow control is performed.

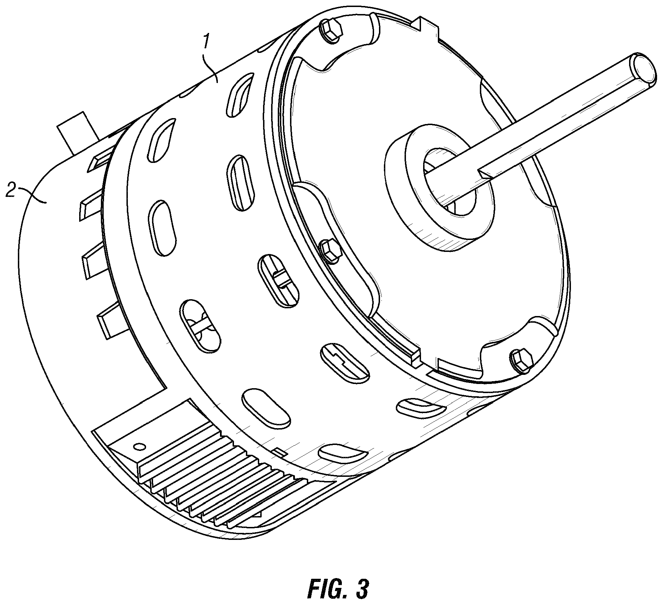

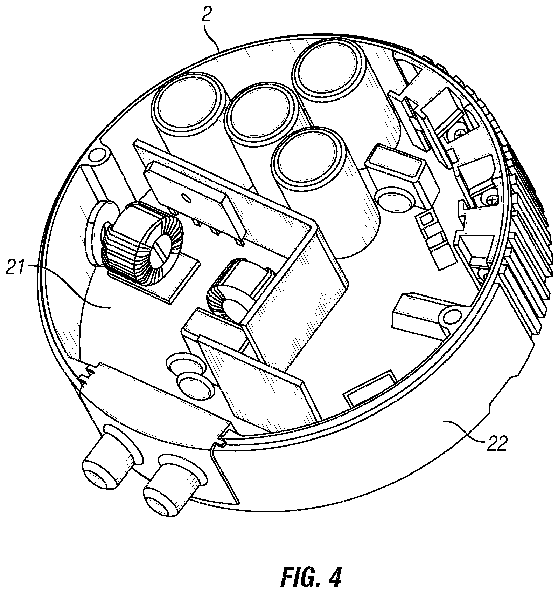

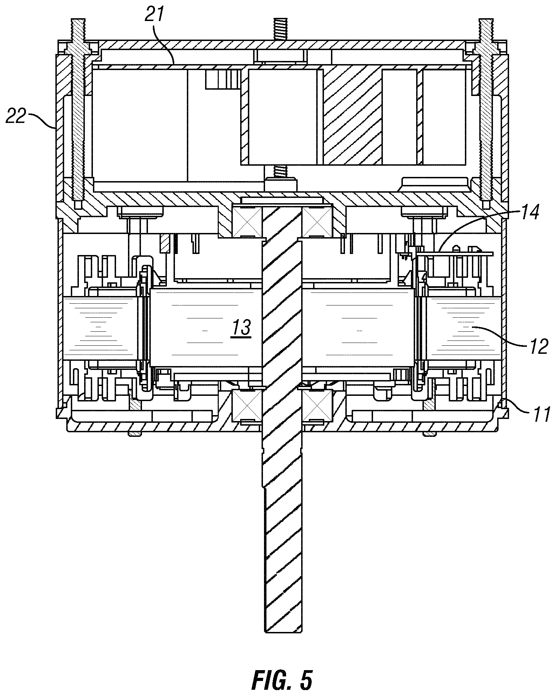

As shown in Figs. 3, 4 and 5, a PM motor typically consists of a motor controller 2 and a single motor body 1. The single motor body 1 includes a stator assembly 12, a rotor assembly 13 and an enclosure assembly 11. The rotor assembly 13 is mounted on the enclosure assembly 11. The single motor body 1 is provided with a Hall sensor 14 for detecting the position of a rotor. The rotor assembly 13 is sheathed inside or outside the stator assembly 12. The motor controller 2 includes a control box 22 and a control circuit board 21 mounted inside the control box 22. The control circuit board 21 generally includes a power supply circuit, a microprocessor, a bus current detection circuit, an inverter circuit and a rotor position measurement circuit 14 (i.e., the Hall sensor). The power supply circuit provides power for each circuit portion. The rotor position measurement circuit detects a rotor position signal and inputs the rotor position signal into the microprocessor. The bus current detection circuit inputs the detected bus current into the microprocessor. A bus voltage detection circuit inputs the DC bus voltage into the processor. The microprocessor controls the inverter circuit, and the inverter circuit controls each phase coil winding of the stator assembly 12 to be switched on or off.

**Embodiment 1**

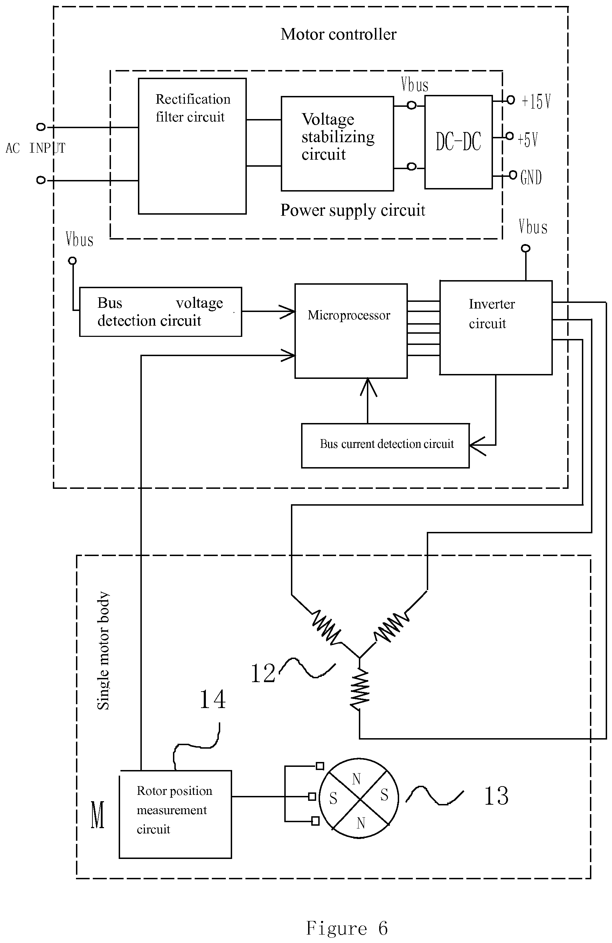

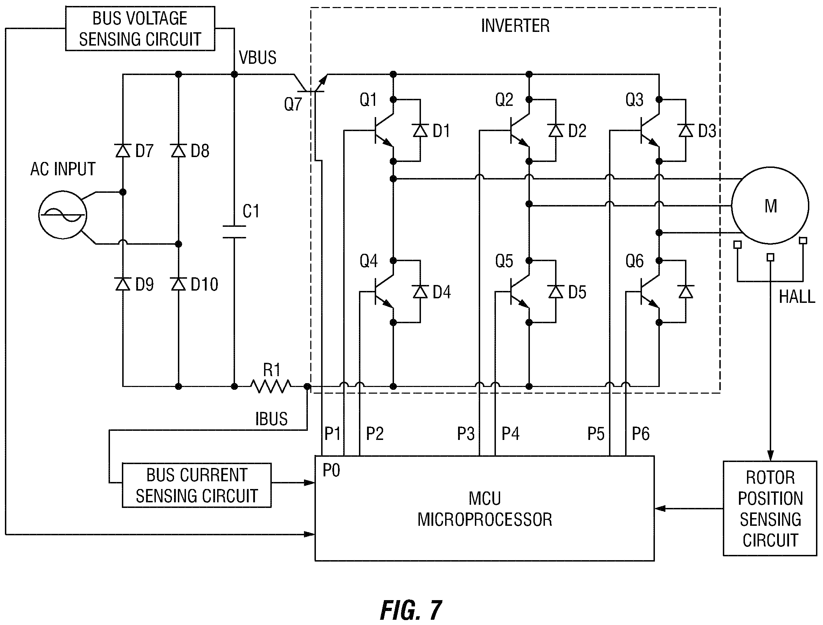

As shown in Figs. 6 and 7, it is assumed that the PM motor is a 3-phase brushless DC permanent magnet synchronous motor. The rotor position measurement circuit 14 generally employs 3 Hall sensors. The 3 Hall sensors detect the position of a rotator in 360° electric angle cycle, respectively. The power-on of each phase coil winding of the stator assembly 12 is changed once at every 120° electric angle, so as to form a 3-phase 6-step control mode. AC INPUT passes through a full-wave rectification circuit consisting of diodes D7, D8, D9 and D10, and then a DC bus voltage Vbus is output from one terminal of a capacitor C1. The DC bus voltage Vbus is related to the input AC voltage. After the voltage of the AC INPUT is determined, the line voltage UP of a 3-phase winding is a PWM chopping output voltage. UP=Vbus*w, where w is a duty ratio of a PWM signal input into the inverter circuit by the microprocessor. Changing the line voltage UP may change a DC bus current Ibus. The inverter circuit consists of electronic switchers Q1, Q2, Q3, Q4, Q5 and Q6. The control terminals of the electronic switchers Q1, Q2, Q3, Q4, Q5 and Q6 are controlled by 6 PWM signals (P1, P2, P3, P4, P5 and P6) output by the microprocessor. The inverter circuit is also connected to a resistor R1 for detecting the bus current Ibus. The bus current detection circuit converts the detected bus current Ibus of the resistor R1 and then transmits it to the microprocessor. The motor input power control is controlled by an electronic switcher Q7. A PWM signal (i.e., P0) output by the microprocessor controls the switching on time of the electronic switcher Q7 so as to control the motor input power.

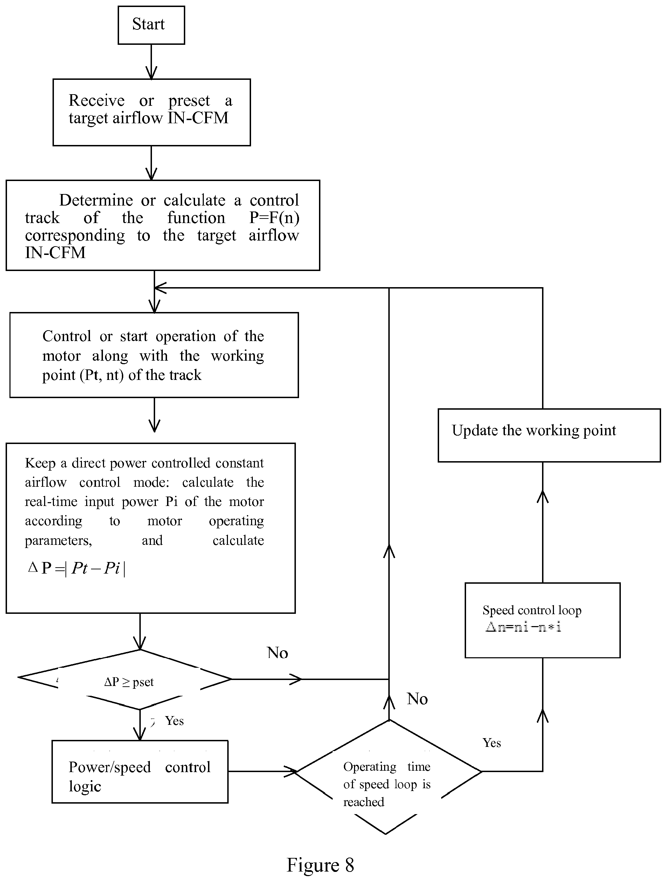

As shown in Fig. 8, a method of constant airflow control of PM motor direct power control in a HVAC system is shown. The PM motor drives a wind wheel and is provided with a stator assembly, a permanent magnet rotor assembly and a motor controller. The motor controller includes a microprocessor, an inverter circuit, a rotor position measurement circuit, a bus current detection circuit, a bus voltage detection circuit and a motor input power control circuit (not shown); the rotor position measurement circuit detects a rotor position signal and inputs the rotor position signal into the microprocessor; the microprocessor calculates the real-time rotation speed n of the motor; the bus current detection circuit inputs a bus current into the microprocessor; the bus voltage detection circuit inputs a DC bus voltage into the processor; the microprocessor controls the inverter circuit; the inverter circuit controls each phase coil winding of the stator assembly to be powered on or off; and the microprocessor controls the motor input power control circuit, characterized in that, the method of constant airflow control of PM motor direct power control includes the following steps of:

step A) starting the motor controller to receive or preset a target airflow IN-CFM;

step B) acquiring a corresponding function P=f(n) according to the target airflow IN-CFM, wherein n denotes a rotation speed, and P denotes the input power of the motor;

step C) entering a direct power controlled constant airflow control mode: controlling the motor or starting the motor when the speed of the motor is 0, so as to allow the motor to reach a steady working point (pt, nt) along a control track of the function P=f(n), wherein pt, nt are a pair of input power and rotation speed on a track of the control function P=f(n) meeting the constant airflow;

step D) keeping the direct power controlled constant airflow control mode: calculating the real-time input power Pi of the motor according to operating parameters of the motor, and calculating $\Delta P=|Pt\text{-}Pi|$;

step E) keeping the current working point if the power increment value $\Delta P$ is less than a set value $P_{set}$;

step F) calculating, by a power/rotation speed control logic, whether the operating time of a speed loop is reached if the power increment value $\Delta P$ is greater than or equal to the set value $P_{set}$, and keeping the current working point if the operating time of the speed loop is not reached yet; and

step G) entering a speed control circuit to adjust the speed according to $\Delta n =|ni\text{-}nt|$ if the operating time of the speed loop is already reached, so as to realize a new working point (Pi, ni) on the track, i.e., assuming that pt=Pi and nt=ni, and returning to step C, where ni denotes a real-time rotation speed.

The above function P=f(n) is obtained in such a way: collecting original data at first, adjusting from a low static pressure to a high static pressure with respect to several target airflows all the time, where the static pressure can cover an actually applied static pressure range; making the motor being at constant rotation speed control in the process of adjusting the static pressure, keeping the airflow be a target airflow by adjusting the rotation speed n and the real-time input power Pi of the motor, and recording the steady rotation speed n and the corresponding real-time input power Pi of the motor at this moment, so that a group of the rotation speed n and the real-time input power Pi is generated with respect to each of the several target airflows; and then, generating a function P=f(n) corresponding to each of the several target airflows by a curve fitting method.

If an externally input target airflow value IN-CFM is not equal to one of the several target airflows determined above, a function P=f(n) corresponding to any externally input target airflow value IN-CFM may be fitted and calculated by an interpolation method, so as to realize the constant airflow control of any target airflow in the whole course.

The function relation P=f(n) is a polynomial function: $P= C_1+C_2\times n+...+C_m\times n^{m-1}$, wherein $C_1$, $C_2$, $\cdots$,$C_m$ are all coefficients, n denotes a rotation speed value of the motor, each of the target airflows corresponds to a group of coefficients $C_1$,$C_2$, $\cdots$,$C_m$, and the coefficients are stored; and the microprocessor acquires the corresponding group of coefficients $C_1$,$C_2$,$\cdots$,$C_m$ by a table lookup method or an interpolation method according to the input target airflow value IN-CFM so as to obtain the function relation P=f(n).

The function relation P=f(n) is a second-order function: $P=C_1+C_2\times n+C_3\times n^2$.

The development and mathematic model of the direct power controlled constant airflow control method (**Direct P Control for Constant Airflow Control Apparatus Method**) provided by the present disclosure s established in such a way:

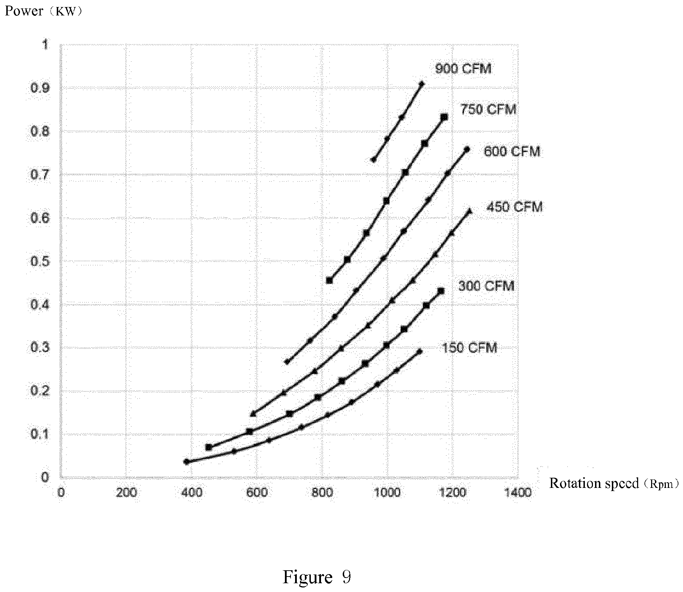

generally, in a ventilation system, a fan is driven by a PM motor driver to generate airflow at a steady state. The constant airflow control is realized by controlling the speed and power under a static pressure, referring to the following relational expression: CFM=F (P, speed, pressure), wherein CFM denotes the airflow, P denotes the power, speed denotes the speed, and the pressure denotes the static pressure. When the static pressure is changed, the constant airflow is maintained through controlling the power and speed. With the increase of the static pressure, the power and speed also change with the static pressure. A cluster of constant airflow CFM curves may be determined, as shown in Fig. 9. Based on these constant airflow CFM curves, a control model is developed. When the product control determines airflow requirements, a constant airflow CFM is provided by controlling the power and speed under a specific static pressure. In Fig. 9, the characteristic curves represent constant airflow physical characteristics of keeping control of power and speed. Within the rated power range of all motors, for air conditioner manufacturers of airflow systems in any design, based on the test results of power and speed curves, it can be concluded that a typical quadratic function may be better used as a typical function for developing and establishing a model: $P= C_1+C_2\times n+C_3\times n^2$. By selecting three undetermined points (A, B and C) on the curves, i.e., data (p1, n1), (p2, n2) and (p3, n3) in corresponding coordinates, coefficients C1, C2 and C3 are acquired, referring to the following formula:

$$F(A,B,C) = \sum_i^m (Yi-(C1+C2*n+C3*n^2))^2 \quad ;$$

the equation is resolved by $\partial F/\partial A=0$, $\partial F/\partial B=0$ and $\partial F/\partial C=0$, and then m=3.

The curve fitting process is: selecting a polynomial to describe a curve; the coefficients of the polynomial may be obtained by the least square method. Theoretically, $P=C_1+C_2\times n+C_3\times n^2+...+Cm\times n^{m-1}$ can be used, but practically, a binomial selected may meet general requirements. The function relation $P=f(n)$ is a second-order function: $P= C_1+C_2\times n+C_3\times n^2$, wherein $C_1$, $C_2$ and $C_3$ are all coefficients, n denotes a rotation speed value of the motor, any one of the several determined target airflows is corresponding to a group of coefficients $C_1$, $C_2$, and $C_3$, and the coefficients are stored; and the microprocessor acquires the corresponding group of coefficients $C_1$, $C_2$, and $C_3$ by a looking up a table according to the input target airflow value IN-CFM so as to obtain the function relation $P=f(n)$. In a certain load, each target airflow corresponds to a group of coefficients $C_1$, $C_2$, and $C_3$, which is specifically shown as the following Table 1:

Table 1

| CFM | $C_1$ | $C_2$ | $C_3$ |
|---|---|---|---|
| 150 | 0.338 | -0.151 | 0.0458 |
| 300 | 0.4423 | -0.2113 | 0.0765 |
| 450 | ... | ... | ... |
| 600 | ... | ... | ... |
| 750 | ... | ... | ... |
| 900 | ... | ... | ... |

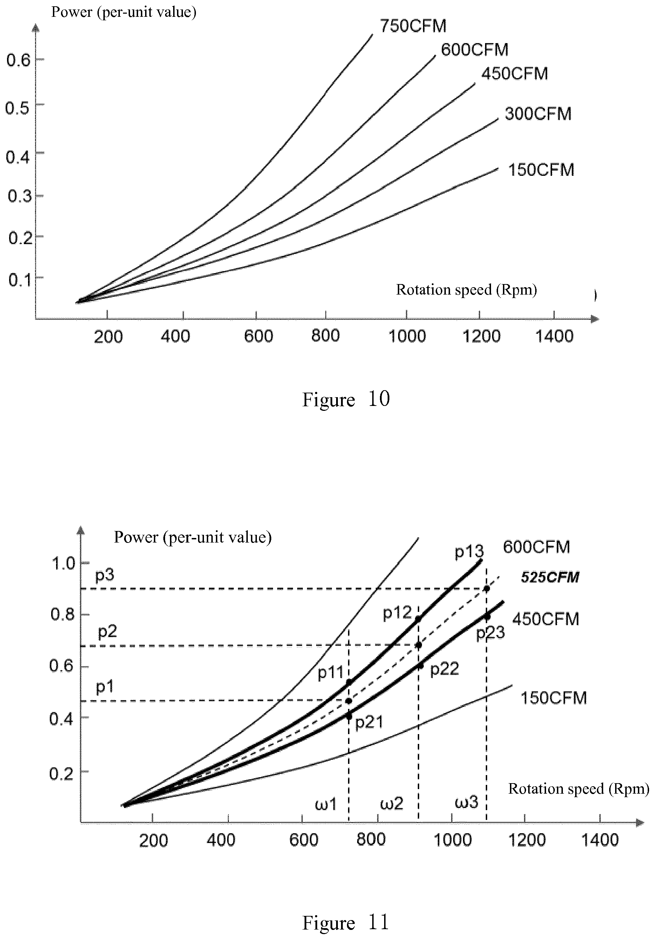

Fig. 10 is a fitting curve of experimental data of direct power controlled constant airflow of a 1/3HP PM motor in a HVAC system with a small pipe. With respect to a given target airflow, the system selects some typical airflows CFM as test points to establish a database for mathematical modeling. These typical points include minimum and maximum airflow values with some intermediate points attached according to the product specification. There are 5 typical airflows CFM as test points, i.e., 150/300/450/600 and 750CFM, respectively.

Table 2 shows an example of the result of test data. The range of the rotation speed of the motor is from 200 to 1400rpm, and the static pressure of the system is from 0.1 to 1 $H_2O$. By keeping a preset constant airflow CCFM output, a per-unit value corresponding to the motor input power of Fig. 10 is acquired, so as to form a database.

Table 2

| 150CFM airflow | | 300CFM airflow | | 450CFM airflow | | 600CFM airflow | | 750CFM airflow | |
|---|---|---|---|---|---|---|---|---|---|
| Rotation speed | Power | Rotation speed | Power | Rotation speed | Power | Rotation speed | Power | Rotation speed | Power |
| 385.3 | 3.6% | 452.2 | 6.9% | 590.1 | 14.8% | 693.6 | 26.6% | 822.9 | 45.6% |
| 385.9 | 3.6% | 577.7 | 10.6% | 680.6 | 19.6% | 763.9 | 31.6% | 878.1 | 50.4% |
| 531 | 6.0% | 700.3 | 14.6% | 778.5 | 24.7% | 839.3 | 37.2% | 936 | 56.4% |
| 637.3 | 8.6% | 787.5 | 18.4% | 858.4 | 29.8% | 905 | 43.2% | 997.9 | 63.9% |
| 737.4 | 11.6% | 861.2 | 22.2% | 940.5 | 35.2% | 987.8 | 50.6% | 1056 | 70.5% |
| 818.4 | 14.4% | 932.6 | 26.2% | 1015 | 41.0% | 1051 | 57.0% | 1115 | 77.1% |
| 891 | 17.4% | 997.9 | 30.5% | 1078 | 45.6% | 1127 | 64.1% | 1176 | 83.3% |
| 970.3 | 21.5% | 1053 | 34.2% | 1146 | 51.6% | 1184 | 70.2% | 1173 | 83.2% |
| 1029 | 24.8% | 1119 | 39.7% | 1197 | 56.6% | 1245 | 75.0% | | |
| 1100 | 28.3% | 1165 | 43.1% | 1252 | 61.6% | | | | |
| 1163 | 32.4% | | | | | | | | |

By the least square method, the quadratic function of power and rotation speed corresponding to each of the predetermined CFM airflow is obtained by a standard calculation method: power defined by these equations and the speed of a working point of any system under a specific static pressure. When the input airflow IN-CFM is preset, the motor system defines a function corresponding to the IN-CFM, and the track of its working points follows the function definition. Equations (3)-(7) may represent standard equations, where C1, C2 and C3 are all constants:

$$Power(150) = 0.3388(\frac{n}{1000})^2 - 0.1551(\frac{n}{1000}) + 0.0458 \quad (3),$$

$$Power(300) = 0.4423(\frac{n}{1000})^2 - 0.2113(\frac{n}{1000}) + 0.0765 \quad (4),$$

$$Power(450) = 0.3987(\frac{n}{1000})^2 - 0.0308(\frac{n}{1000}) + 0.0294 \quad (5),$$

$$Power(600) = 0.2580(\frac{n}{1000})^2 + 0.3983(\frac{n}{1000}) - 0.1379 \quad (6),$$

$$Power(750) = 0.1385(\frac{n}{1000})^2 + 0.8150(\frac{n}{1000}) - 0.3139 \quad (7).$$

Thus, $P = C_1 + C_2 \times n + C_3 \times n^2$ is obtained. Modeling curves of the equations (3)-(7) provide tracks of 5 selected working points required for several constant airflows CFM, where Power denotes the power, and n denotes the rotation speed.

As shown in Fig. 11, if the requested constant air flow IN-CFM is not one of the modeling curves, a new characteristic equation for fitting the requested constant air flow IN-CFM is acquired by an interpolation method. For example, when the requested constant air flow IN-CFM request is received, two adjacent modelling curves CFM1-600cfm and CFM2-450cfm may be identified. Then, two corresponding equations may be used for calculating a new equation of the IN-CFM=525cfm curve. Based on the requested IN-CFM=525cfm, power values of three selected speeds ω1, w2 and w3 are calculated, and then the P value may be calculated by using the equations of the two model curves with respect to double power points at the selected speed through linear weighting interpolation. First, matrix data is listed as below:

$$\begin{bmatrix} P_i \\ P_1(600) \\ P_2(450) \end{bmatrix} = \begin{bmatrix} \omega_1 & \omega_2 & \omega_3 \\ P_{11} & P_{12} & P_{13} \\ P_{21} & P_{22} & P_{23} \end{bmatrix}.$$

For a pair of power points $(p_{1i}, p_{2i})$ corresponding to a selected speed ω, and the selected speeds ω1, ω2 and ω3 corresponding to 3 pairs of power points $(p_{1i}, p_{2i})$, the Pi value may be calculated by linear weighting interpolation:

$$pi = p_{2i} + w \cdot (p_{1i} - p_{2i}).$$

$$w = \frac{CFM - CFM2}{CFM1 - CFM2}.$$

The weight value W is calculated in such a way:

It is to be noted that CFM2≤IN-CFM≤CFM1 and 0≤W≤1. The following matrix equation may be calculated:

$$\begin{bmatrix} \omega_1^2 & \omega_1 & 1 \\ \omega_2^2 & \omega_2 & 1 \\ \omega_3^2 & \omega_3 & 1 \end{bmatrix} \begin{bmatrix} C_1 \\ C_2 \\ C_3 \end{bmatrix} = \begin{bmatrix} P_1 \\ P_2 \\ P_3 \end{bmatrix}.$$

Thus, the function $P=C_1+C_2\times n+C_3\times n^2$ corresponding to the IN-CFM=525cfm may be obtained. To solve the matrix equation, coefficients C1, C2 and C3 may be calculated. Therefore, for any input airflow IN-CFM, a power equation may be obtained. This process is finished during initialization of the microprocessor (i.e., single chip) in the motor controller, and so the calculation of the power is not required to consume much real-time CPU resource.

The real-time input power Pi of the motor is processed by a low-pass digital filter: the filter technique of an infinite pulse response filter is applied and it is assumed that input and output are sampled within a sampling period (PWM switch frequency). A sequence of power input is represented as $(P_{in1},...P_{ini}...,P_{inn})$, and a sequence of power output is represented as ($Pout1, ...Pouti..., Poutn$). In correspondence to a same time point, the low-pass filter may be considered as:

$$\mathbf{p_{ini}} - \mathbf{p_{outi}} = T \frac{\mathbf{P_{outi}} - \mathbf{p_{outi-1}}}{\Delta t}$$

, where, T denotes a time constant.

After the above items, a recurrence relation and a discrete time are given again, and the low-pass filter may be represented as an exponentially weighted moving average:

$$\mathbf{p_{outi}} = \mathbf{a} \cdot \mathbf{p_{ini}} + (1 - \mathbf{a}) \cdot \mathbf{p_{outi-1}},$$

where $\mathbf{a} = \dfrac{\Delta t}{T + \Delta t}$.

According to the definition, a smooth factor is $0 \leq \alpha \leq 1$. If $\alpha = 0.5$, the time constant is equal to the sampling period. If $\alpha << <0.5$, the time constant is obviously greater than the sampling interval.

$$T = \Delta t \left( \frac{1-a}{a} \right).$$

Power filter is controlled by a DPC, and $a \leq 0.01$. Therefore $\Delta t = a$ T.

The change from a filter output to the next filter output is in proportion to the difference between the previous output and input. This smooth exponential decay proportion is shown in a continuous time system. As expected, with the increasing of time, the smooth factor $\alpha$ of the discrete time decreases, the sequence of power output is represented as ($Pout1, ... Pouti..., Poutn$), the reaction is relatively slow, and the sequence of power input is represented as ($P_{in1}, ... P_{ini}...,P_{inn}$). Therefore, the system has higher inertia.

This filter technique may also be applied to process and calculate two signals of DC bus voltage and DC bus current.

It can be seen that the DPC (Direct Power Control) realizes power control by using rotation speed control. The power/rotation speed control logic functions as coordinating the power/rotation speed circuit time constant to ensure the stability of the system. The control may be compared through the accurate control and torque control of the control motor. Whether in a scalar control or a vector control, the speed control is more efficient than the torque control, so that the control accuracy is improved.

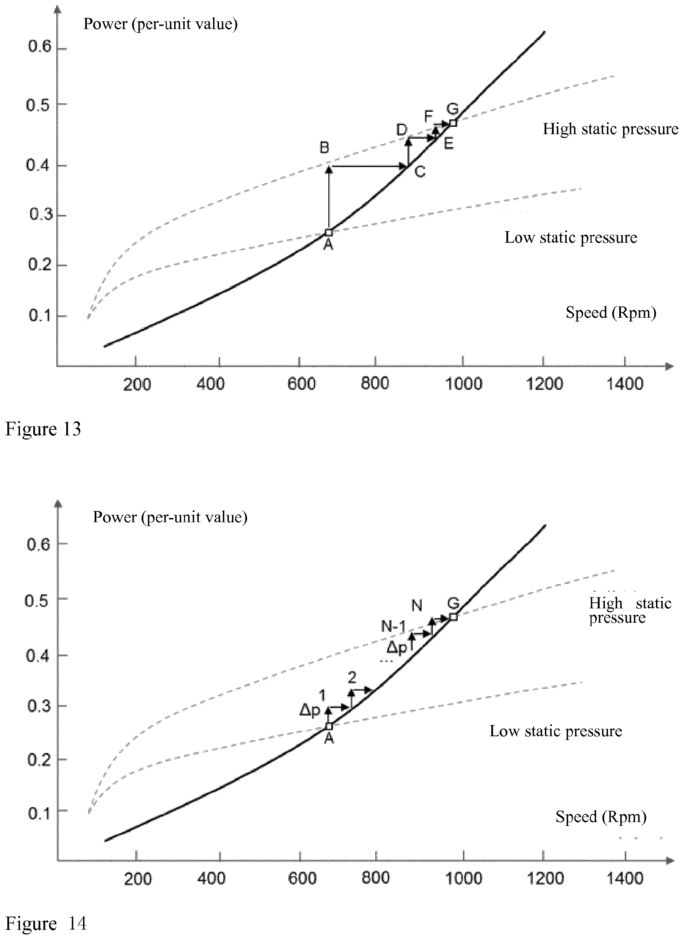

The DPC control realizes the speed control through unique power and fan load speed characteristics. When a motor is operated from the zero rotation speed to a high rotation speed, the power also increases from zero. The rotation speed of the motor will rise until up to a pair of working point A (power, speed), i.e., a static pressure point, as shown in Fig. 13. When the static pressure increases suddenly, the motor provides more power (or larger torque) for maintaining the speed under a speed control mode. As a higher static pressure requires a larger power, the power will rise up to a higher power suddenly. When the motor system reaches a new working point "B" at the same speed, the algorithm will be aware whether this is a constant CFM track curve working point, so as to determine a pair of power/speed point "C". However, the C point is not a steady working point. Due to the requirement for high power, a "D" point is removed, until a new steady working point "G" is converged in such a repeat, and the process is ended.

During implementation, fluctuation and sudden change of power can be reduced by using restricted power increment control. As shown in Fig. 14, the power increment may be designated as $\Delta P$. The speed control may be performed as long as the power change exceeds the power increment $\Delta P$. In this way, all the working points work under the positive/negative bandwidth of the track curves of corresponding constant airflow CFM. The airflow control system is stable in the transient process of static pressure change.

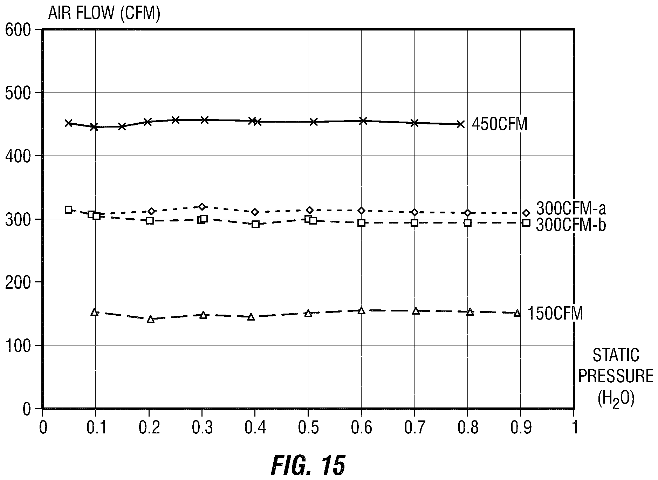

As shown in Fig. 15, the above direct power controlled constant airflow control method and algorithm for a motor have been tested in our PM motor controller. All system performances meet the requirements shown in Fig. 15.

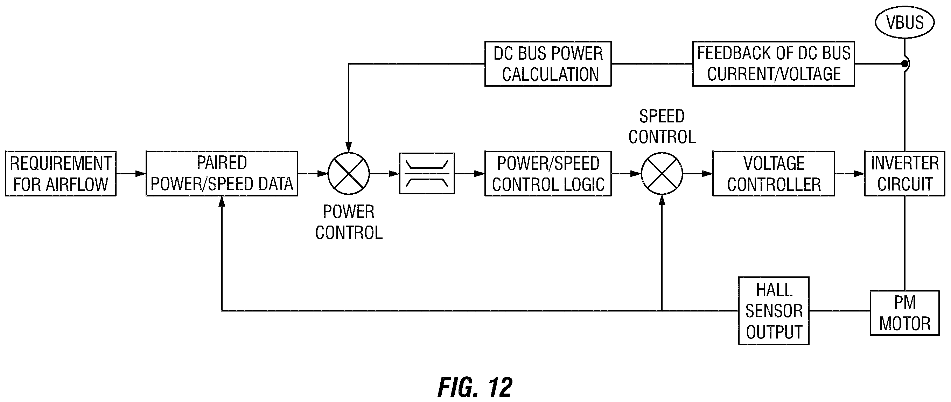

Fig. 12 is a logic diagram of this algorithm in a PM motor scalar control application. The input power is calculated from DC bus voltage and current. The power and rotation speed are limited within a maximum power $P_{max}$ and a maximum rotation speed $n_{max}$.

By calculating the real-time input power Pi of the motor according to the feedback DC bus current/voltage, the calculated value Pt of the motor input power is obtained according to the externally input airflow IN-CFM and power/speed data matching. Then, the power difference $\Delta P$ is obtained by comparing the calculated value Pt of the motor input power with the real-time input power Pi of the motor. The power difference $\Delta P$ is limited, thereby avoiding too large fluctuation in power adjustment due to too large power difference $\Delta P$. The power difference $\Delta P$ is output by the power/speed control logic to perform speed control, and the PWM frequency converter performs rotation speed control.

**Embodiment 2:** The largest difference between this embodiment and Embodiment 1 lies in the calculation of the real-time input power Pi of a motor. In Embodiment 1, scalar control is employed, that is, the real-time input power of a motor is calculated from the collected real-time bus current $I_{bus}$ and real-time bus voltage: $P=I_{bus}\times V_{bus}$. However, the PM motor in this embodiment employs vector control without sensors, and so the calculation of the real-time input power Pi of the motor is relatively complicated.

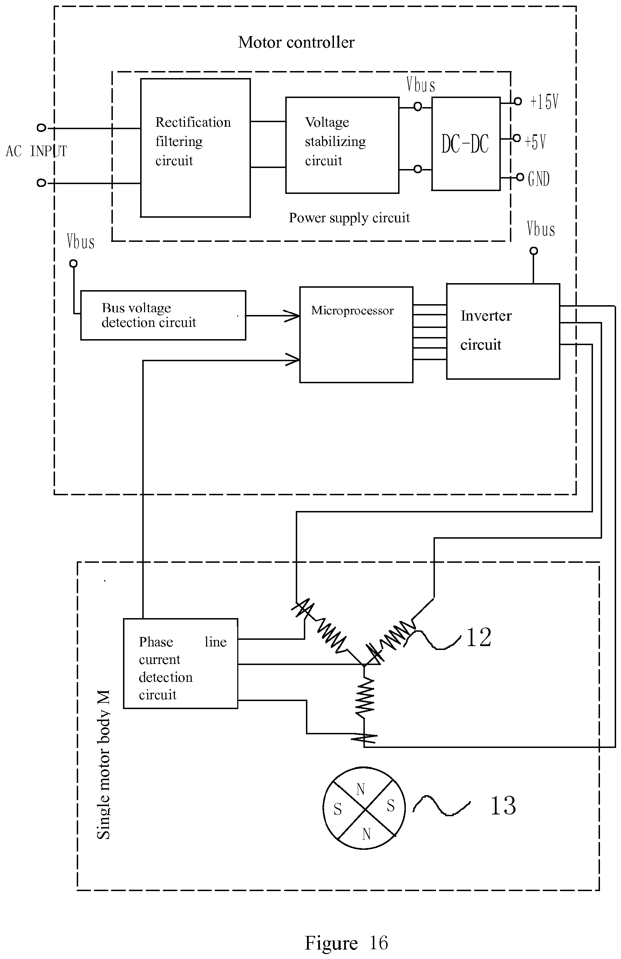

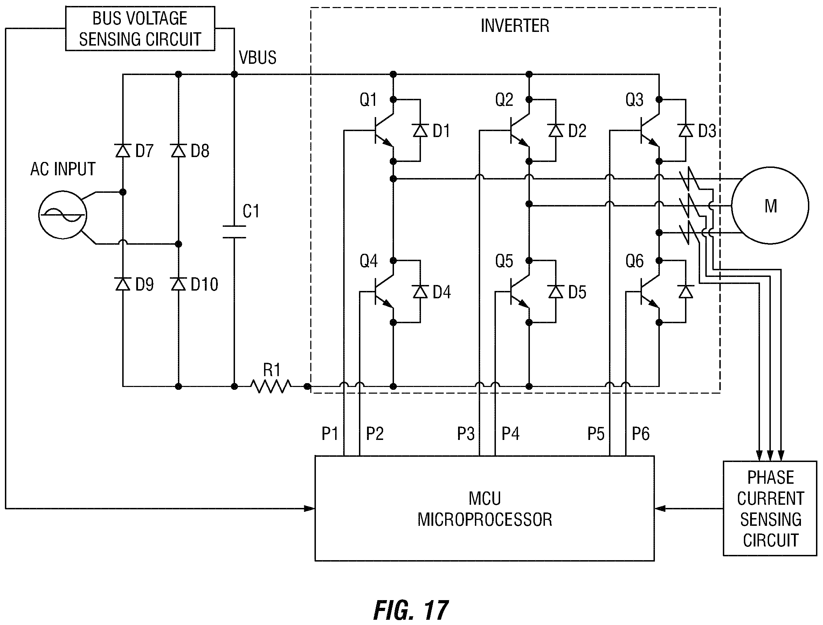

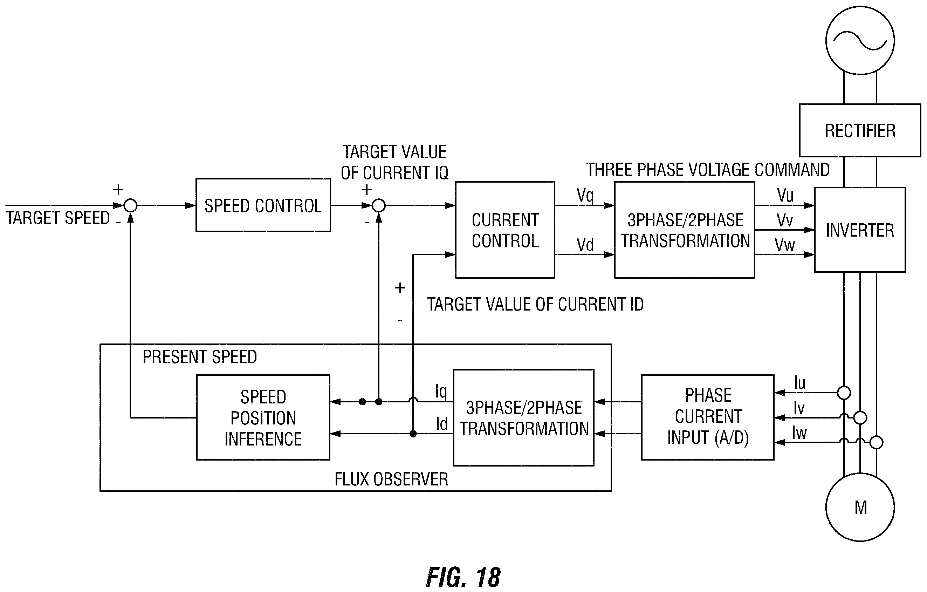

As shown in Figs. 16 and 17, it is assumed that the PM motor is a 3-phase brushless DC permanent magnet synchronous motor based on vector control without rotator position sensors. A phase current detection circuit detects the phase current of a stator winding and then inputs the phase current into a microprocessor. A flow observer in the microprocessor calculates the rotation speed n and position of the rotor according to the phase current and DC bus voltage. AC INPUT passes through a full-wave rectification circuit consisting of diodes D7, D8, D9 and D10, and then the DC bus voltage $V_{bus}$ is output from one terminal of a capacitor C1. The DC bus voltage $V_{bus}$ is related to the input AC voltage. Fig. 18 is a block diagram of a typical vector control.

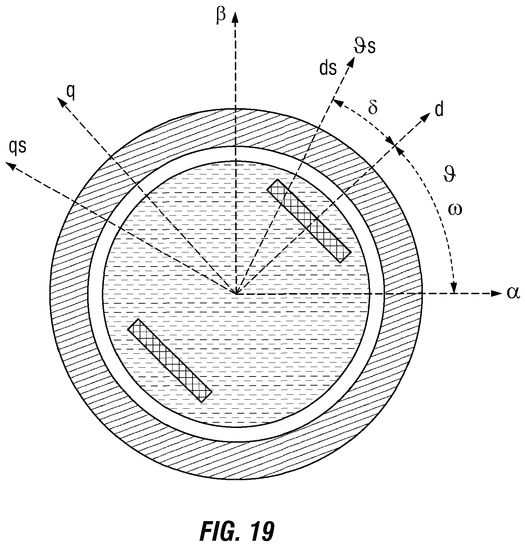

As shown in Fig. 19, a diagram of coordinate systems of a typical vector control is shown. The vector control has been recorded in details in textbooks and patent documents, so it will not be repeated here. If a target rotation speed to be controlled is known, the closed-loop control may be realized by vector control. There are 3 coordinate systems in the figure, i.e., a fixed Cartesian coordinate system (a - $\beta$ coordinate), a rotor rotational coordinate (d-q axis coordinate) and a stator flux rotational coordinate system (ds-qs axis coordinate). In the figure, w denotes the speed of the rotor, $\theta$ denotes a rotational angle between the d-q axis coordinate and the ds-qs axis coordinate, and $\delta$ denotes a rotational load angle of the d-q axis coordinate and the ds-qs axis coordinate. Therefore, the vector current and vector voltage of the d-q axis coordinate system may be converted into the current and voltage of the $\alpha$ - $\beta$ coordinate system.

During the vector control shown in Figs. 16 and 17, a motor operating parameter detection circuit includes a phase current detection circuit and a bus voltage detection circuit. The phase current detection circuit and the bus voltage detection circuit detect phase current and bus voltage data and then input them into the microprocessor. The real-time phase current and the real-time bus voltage $V_{bus}$ are converted into currents $|\alpha$ and $|\beta$ and voltages V $\alpha$ and V $\beta$ in the $\alpha$ and $\beta$ coordinates. The real-time power input of the motor is Pi=3/2 ($|\alpha$ X V $\alpha$ + $|\beta$ X V $\beta$).

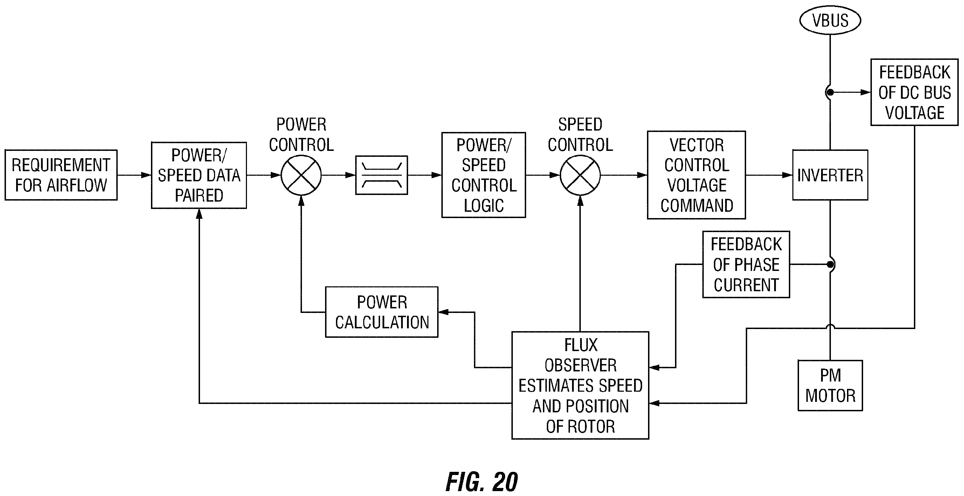

As shown in Fig. 20, a logic diagram of a DPC constant airflow control method in a vector control PM motor system without sensors is shown. The input power is calculated by vector control. The power is filtered and then used for power control. A magnetic flux observer estimates the rotation speed and position of a rotor. According to the externally input airflow IN-CFM and power/speed data matching, the corresponding calculated value Pt of the motor input power is calculated by means of the function P=f(n). Then, a power difference $\Delta P$ is obtained by comparing the calculated value Pt of the motor input power with the real-time output power Pi of the motor. The power difference $\Delta P$ is limited, thereby avoiding too large fluctuation in power adjustment due to too large power difference $\Delta P$. The power difference $\Delta P$ is output by the power/speed control logic to perform speed control, and the speed loop control is realized by the vector control.

## Claims

1. A method for providing constant airflow with a variable speed motor (1) for a Heating, Ventilation, and Air Conditioning (HVAC) system, comprising the steps of:

(a) calculating a real-time input power Pi and real-time rotation speed ni of the motor (1);

(b) receiving a target airflow IN-CFM; and

(c) determining a steady working point of the motor (1) along a control track of a function $P=f(n)$ that corresponds to the target airflow IN-CFM, wherein the steady working point specifies a power Pt and speed nt of the motor (1) on the control track of the control function $P=f(n)$ that provides a constant airflow corresponding to the target airflow IN-CFM ;

(d) determining whether a power increment value $\Delta P = |Pt - Pi|$ is less than a set value $P_{set}$;

(e) controlling the motor by repeatedly adjusting the power and speed of the motor (1) when the power increment value is greater than or equal to the set value $P_{set}$ until the motor (1) operates at the steady working point and provides the target airflow IN-CFM such that airflow provided by the HVAC system is maintained constant at the target airflow IN-CFM before and after the step of repeatedly adjusting the power and speed of the motor (1), wherein repeatedly adjusting the power and speed of the motor (1) comprises adjusting the motor power and then subsequently adjusting the motor speed.

2. The method of claim 1, wherein the function $P=f(n)$ corresponding to a target airflow is obtained by recording steady rotation speeds and corresponding real-time input powers that yield each of several target airflows covering an actually applied static pressure range.

3. The method of claim 2, wherein adjusting the power comprises adjusting the speed of the motor (1) when the power increment value $\Delta P$ is greater than or equal to than the set value $P_{set}$ until the power increment value $\Delta P$ is less than the set value $P_{set}$.

4. The method of claim 2, further comprising if an externally input target airflow IN-CFM is not equal to one of the several target airflows for which steady rotation speeds and corresponding real-time input powers have been recorded, a function $P=f(n)$ corresponding to any externally input target airflow IN-CFM is fitted and calculated by an interpolation method.

5. The method of claim 1, further comprising determining the real-time input power of the motor based, at least in part, on instantaneous values of a direct current (DC) bus voltage and a DC bus current on an inverter coupled to the motor (1).

6. The method of claim 1, further comprising determining the real-time input power of the motor (1) based, at least in part, on direct current (DC) bus voltage on an inverter coupled to the motor (1) and phase currents of the motor, wherein the phase currents correspond to the currents on a plurality of phase windings of a stator (12) of the motor (1).

7. The method of claim 1, further comprising maintaining the current working point of the motor (1) when the power increment value $\Delta P$ is less than the set value $P_{set}$.

8. The method of claim 1, further comprising repeating steps a - e such that the motor (1) provides constant airflow in the HVAC system.

9. The method of claim 1, wherein the motor (1) is a permanent magnet motor.

10. An apparatus for providing constant airflow for a Heating, Ventilation, and Air Conditioning (HVAC) system, comprising:

a variable speed motor (1); and
a motor controller (2) coupled to the variable speed motor (1) and configured to control the operation of the variable speed motor (1), the motor controller (2) comprising a processor configured to perform the steps of:

(a) calculating a real-time input power Pi and real-time rotation speed ni of the motor (1);

(b) receiving a target airflow IN-CFM;

(c) determining a steady working point of the motor (1) along a control track of a function $P=f(n)$ that corresponds to the target airflow IN-CFM, wherein the steady working point specifies a power Pt and speed nt of the motor on the control track of the control function $P=f(n)$ that provides a constant airflow corresponding to the target airflow IN-CFM;

(d) determining whether a power increment value $\Delta P = |Pt - Pi|$ is less than a set value $P_{set}$; and

(e) controlling the motor by repeatedly adjusting the power and speed of the motor (1) when the power increment value ΔP is greater than or equal to the set value $P_{set}$ until the motor (1) operates at the steady working point and provides the target airflow IN-CFM such that airflow provided by the HVAC system is maintained constant at the target airflow IN-CFM before and after the step of repeatedly adjusting the power and speed of the motor (1), wherein repeatedly adjusting the power and speed of the motor (1) comprises adjusting the motor power and then subsequently adjusting the motor speed.

11. The apparatus of claim 10, wherein the function P=f(n) corresponding to a target airflow is obtained by recording steady rotation speeds and corresponding real-time input powers that yield each of several target airflows covering an actually applied static pressure range.

12. The apparatus of claim 11, wherein the processor configured to perform the step of adjusting the power comprises the processor being configured to perform the step of adjusting the speed of the motor when the power increment value ΔP is greater than or equal to the set value $P_{set}$ until the real-time input power Pi of the motor (1) is within the interval $P_{set}$ of the steady working point power Pt.

13. The apparatus of claim 11, wherein the processor is further configured to perform the step of, if an externally input target airflow IN-CFM is not equal to one of the several target airflows for which steady rotation speeds and corresponding real-time input powers have been recorded, fitting and calculating by an interpolation method a function P=f(n) corresponding to any externally input target airflow IN-CFM.

## Patentansprüche

1. Verfahren zum Bereitstellen von einem konstanten Luftstrom mit einem Regelmotor (1) für ein Klimatechnik (Heating, Ventilation, and Air Conditioning, HVAC) -System, umfassend die folgenden Schritte:

(a) Berechnen einer Echtzeit-Eingangsleistung Pi und Echtzeit-Drehgeschwindigkeit ni des Motors (1);
(b) Empfangen eines Ziel-Luftstroms IN-CFM; und
(c) Bestimmen eines stabilen Arbeitspunkts des Motors (1) entlang einer Steuerspur einer Funktion P=f(n), die mit dem Ziel-Luftstrom IN-CFM übereinstimmt, wobei der stabile Arbeitspunkt eine Leistung Pt und Geschwindigkeit nt des Motors (1) auf der Steuerspur der Steuerfunktion P=f(n) spezifiziert, die einen kontanten Luftstrom bereitstellt, der mit dem Ziel-Luftstrom IN-CFM übereinstimmt;
(d) Bestimmen, ob eine Leistungswertzunahme ΔP = |Pt - Pi| weniger als ein fester Wert $P_{set}$ ist;
(e) Steuern des Motors durch wiederholtes Einstellen der Leistung und Geschwindigkeit des Motors (1), wenn die Leistungswertzunahme größer als oder gleich wie der feste Wert $P_{set}$ ist, bis der Motor (1) am stabilen Arbeitspunkt arbeitet und den Ziel-Luftstrom IN-CFM bereitstellt, sodass Luftstrom, der durch das HVAC-System bereitgestellt wird, konstant am Ziel-Luftstrom IN-CFM gehalten wird, vor und nach dem Schritt des wiederholten Einstellens der Leistung und Geschwindigkeit des Motors (1), wobei das wiederholte Einstellen der Leistung und Geschwindigkeit des Motors (1) das Einstellen der Motorleistung und dann anschließend das Einstellen der Motorgeschwindigkeit umfasst.

2. Verfahren nach Anspruch 1, wobei die Funktion P=f(n), die mit einem Ziel-Luftstrom übereinstimmt, durch Aufzeichnen von stabilen Drehgeschwindigkeiten und entsprechenden Echtzeit-Eingangsleistungen erhalten wird, die jeden von verschiedenen Ziel-Luftströmen erzielen, die einen tatsächlich ausgeübten statischen Druckbereich abdecken.

3. Verfahren nach Anspruch 2, wobei das Einstellen der Leistung das Einstellen der Geschwindigkeit des Motors (1) umfasst, wenn die Leistungswertzunahme ΔP größer als oder gleich wie der feste Wert $P_{set}$ ist, bis die Leistungswertzunahme ΔP weniger als der feste Wert $P_{set}$ ist.

4. Verfahren nach Anspruch 2, ferner umfassend, wenn ein extern eingegebener Ziel-Luftstrom IN-CFM nicht gleich einem der verschiedenen Ziel-Luftströme ist, für die stabile Drehgeschwindigkeiten und entsprechende Echtzeit-Eingangsleistungen aufgezeichnet wurden, eine Funktion P=f(n), die mit einem beliebigen extern eingegebenen Ziel-Luftstrom IN-CFM übereinstimmt, durch ein Interpolationsverfahren angepasst und berechnet wird.

5. Verfahren nach Anspruch 1, ferner umfassend das Bestimmen der Echtzeit-Eingangsleistung des Motors, basierend, zumindest teilweise, auf Momentanwerten einer Gleichstrom (direct current, DC) -Busspannung und einem DC-Busstrom auf einem Wechselrichter, der an den Motor (1) gekoppelt ist.

**6.** Verfahren nach Anspruch 1, ferner umfassend das Bestimmen der Echtzeit-Eingangsleistung des Motors (1), basierend, zumindest teilweise, auf Gleichstrom (DC) - Busspannung auf einem Wechselrichter, der an den Motor (1) gekoppelt ist, und Phasenströmen des Motors, wobei die Phasenströme den Strömen auf einer Vielzahl von Phasenwicklungen eines Stators (12) des Motors (1) entsprechen.

**7.** Verfahren nach Anspruch 1, ferner umfassend das Aufrechthalten des aktuellen Arbeitspunkts des Motors (1), wenn die Leistungswertzunahme $\Delta P$ weniger als der feste Wert $P_{set}$ ist.

**8.** Verfahren nach Anspruch 1, ferner umfassend das Wiederholen von Schritten a-e, sodass der Motor (1) einen konstanten Luftstrom im HVAC-System bereitstellt.

**9.** Verfahren nach Anspruch 1, wobei der Motor (1) ein Permanentmagnetmotor ist.

**10.** Vorrichtung zum Bereitstellen von einem konstanten Luftstrom für ein Klimatechnik (HVAC) -System, umfassend:

einen Regelmotor (1); und
eine Motorsteuerung (2), die mit dem Regelmotor (1) gekoppelt ist und konfiguriert ist, um den Betrieb des Regelmotors (1) zu steuern, wobei die Motorsteuerung (2) einen Prozessor umfasst, der konfiguriert ist, um die folgenden Schritte durchzuführen:

(a) Berechnen einer Echtzeit-Eingangsleistung Pi und Echtzeit-Drehgeschwindigkeit ni des Motors (1);
(b) Empfangen eines Ziel-Luftstroms IN-CFM;
(c) Bestimmen eines stabilen Arbeitspunkts des Motors (1) entlang einer Steuerspur einer Funktion P=f(n), die mit dem Ziel-Luftstrom IN-CFM übereinstimmt, wobei der stabile Arbeitspunkt eine Leistung Pt und Geschwindigkeit nt des Motors auf der Steuerspur der Steuerfunktion P=f(n) spezifiziert, die einen konstanten Luftstrom bereitstellt, der mit dem Ziel-Luftstrom IN-CFM übereinstimmt;
(d) Bestimmen, ob eine Leistungswertzunahme $\Delta P$ = |Pt - Pi| weniger als ein fester Wert $P_{set}$ ist;
(e) Steuern des Motors durch wiederholtes Einstellen der Leistung und Geschwindigkeit des Motors (1), wenn die Leistungswertzunahme $\Delta P$ größer als oder gleich wie der feste Wert $P_{set}$ ist, bis der Motor (1) am stabilen Arbeitspunkt arbeitet und den Ziel-Luftstrom IN-CFM bereitstellt, sodass Luftstrom, der durch das HVAC-System bereitgestellt wird, konstant am Ziel-Luftstrom IN-CFM gehalten wird, vor und nach dem Schritt des wiederholten Einstellens der Leistung und Geschwindigkeit des Motors (1), wobei das wiederholte Einstellen der Leistung und Geschwindigkeit des Motors (1) das Einstellen der Motorleistung und dann anschließend das Einstellen der Motorgeschwindigkeit umfasst.

**11.** Vorrichtung nach Anspruch 10, wobei die Funktion P=f(n), die mit einem Ziel-Luftstrom übereinstimmt, durch Aufzeichnen von stabilen Drehgeschwindigkeiten und entsprechenden Echtzeit-Eingangsleistungen erhalten wird, die jeden von verschiedenen Ziel-Luftströmen erzielen, die einen tatsächlich ausgeübten statischen Druckbereich abdecken.

**12.** Vorrichtung nach Anspruch 11, wobei der Prozessor, der konfiguriert ist, um den Schritt des Einstellens der Leistung durchzuführen, umfasst, dass der Prozessor konfiguriert ist, um den Schritt des Einstellens der Geschwindigkeit des Motors durchzuführen, wenn die Leistungswertzunahme $\Delta P$ größer als oder gleich wie der feste Wert $P_{set}$ ist, bis die Echtzeit-Eingangsleistung Pi des Motors (1) im Intervall $P_{set}$ der stabilen Arbeitspunktleistung Pt ist.

**13.** Vorrichtung nach Anspruch 11, wobei der Prozessor ferner konfiguriert ist, um, wenn ein extern eingegebener Ziel-Luftstrom IN-CFM nicht gleich einem der verschiedenen Ziel-Luftströme ist, für die stabile Drehgeschwindigkeiten und entsprechende Echtzeit-Eingangsleistungen aufgezeichnet wurden, den Schritt des Anpassens und Berechnens, durch ein Interpolationsverfahren, einer Funktion P=f(n), die mit einem beliebigen extern eingegebenen Ziel-Luftstrom IN-CFM übereinstimmt, durchzuführen.

**Revendications**

**1.** Procédé pour fournir un débit d'air constant avec un moteur à vitesse variable (1) pour un système de chauffage, de ventilation et de climatisation (HVAC), comprenant les étapes de :

(a) le calcul d'une puissance d'entrée en temps réel Pi et d'une vitesse de rotation en temps réel ni du moteur (1) ;

(b) la réception d'un débit d'air cible IN-CFM ; et

(c) la détermination d'un point de fonctionnement stable du moteur (1) le long d'un tracé de contrôle d'une fonction P=f(n) qui correspond au débit d'air cible IN-CFM, dans lequel le point de fonctionnement stable spécifie une puissance Pt et une vitesse nt du moteur (1) sur le tracé de contrôle de la fonction de contrôle P=f(n) qui fournit un débit d'air constant correspondant au débit d'air cible IN-CFM ;

(d) la détermination qu'une valeur d'incrément de puissance $\Delta P = |Pt-Pi|$ est ou non inférieure à une valeur prédéfinie $P_{set}$ ;

(e) la commande du moteur par l'intermédiaire de l'ajustement répété de la puissance et la vitesse du moteur (1) lorsque la valeur d'incrément de puissance est supérieure ou égale à la valeur prédéfinie $P_{set}$ jusqu'à ce que le moteur (1) fonctionne au point de fonctionnement stable et fournisse le débit d'air cible IN-CFM de telle sorte que le débit d'air fourni par le système HVAC soit maintenu constant au débit d'air cible IN-CFM avant et après l'étape de l'ajustement répété de la puissance et de la vitesse du moteur (1), dans lequel l'ajustement répété de la puissance et de la vitesse du moteur (1) comprend l'ajustement de la puissance de moteur et puis ensuite l'ajustement de la vitesse de moteur.

2. Procédé selon la revendication 1, dans lequel la fonction P=f(n) correspondant à un débit d'air cible est obtenue en enregistrant des vitesses de rotation stables et des puissances d'entrée en temps réel correspondantes qui produisent chacun de plusieurs débits d'air cibles couvrant une plage de pression statique réellement appliquée.

3. Procédé selon la revendication 2, dans lequel l'ajustement de la puissance comprend l'ajustement de la vitesse du moteur (1) lorsque la valeur d'incrément de puissance $\Delta P$ est supérieure ou égale à la valeur prédéfinie $P_{set}$ jusqu'à ce que la valeur d'incrément de puissance $\Delta P$ soit inférieure à la valeur prédéfinie $P_{set}$.

4. Procédé selon la revendication 2, comprenant en outre, si un débit d'air cible IN-CFM entré de façon externe n'est pas égal à un des multiples débits d'air cibles pour lesquels des vitesses de rotation stables et des puissances d'entrée en temps réel correspondantes ont été enregistrées, une fonction P=f(n) correspondant à un quelconque débit d'air cible IN-CFM entré de façon externe est adaptée et calculée par une méthode d'interpolation.

5. Procédé selon la revendication 1, comprenant en outre la détermination de la puissance d'entrée en temps réel du moteur sur la base, au moins en partie, de valeurs instantanées d'une tension de bus à courant continu (CC) et d'un courant de bus à CC sur un onduleur couplé au moteur (1).

6. Procédé selon la revendication 1, comprenant en outre la détermination de la puissance d'entrée en temps réel du moteur (1) sur la base, au moins en partie, d'une tension de bus à courant continu (CC) sur un onduleur couplé au moteur (1) et de courants de phase du moteur, dans lequel les courants de phase correspondent aux courants sur une pluralité d'enroulements de phase d'un stator (12) du moteur (1).

7. Procédé selon la revendication 1, comprenant en outre le maintien du point de fonctionnement actuel du moteur (1) lorsque la valeur d'incrément de puissance $\Delta P$ est inférieure à la valeur prédéfinie $P_{set}$.

8. Procédé selon la revendication 1, comprenant en outre la répétition des étapes a - e de telle sorte que le moteur (1) fournisse le débit d'air constant dans le système HVAC.

9. Procédé selon la revendication 1, dans lequel le moteur (1) est un moteur à aimant permanent.

10. Appareil pour fournir un débit d'air constant pour un système de chauffage, de ventilation et de climatisation (HVAC), comprenant :

un moteur à vitesse variable (1) ; et

une unité de commande de moteur (2) couplée au moteur à vitesse variable (1) et configurée pour commander le fonctionnement du moteur à vitesse variable (1), l'unité de commande de moteur (2) comprenant un processeur configuré pour réaliser les étapes de :

(a) le calcul d'une puissance d'entrée en temps réel Pi et d'une vitesse de rotation en temps réel ni du moteur (1) ;

(b) la réception d'un débit d'air cible IN-CFM ;

(c) la détermination d'un point de fonctionnement stable du moteur (1) le long d'un tracé de contrôle d'une fonction P=f(n) qui correspond au débit d'air cible IN-CFM, dans lequel le point de fonctionnement stable spécifie une puissance Pt et une vitesse nt du moteur sur le tracé de contrôle de la fonction de contrôle P=f(n) qui fournit un débit d'air constant correspondant au débit d'air cible IN-CFM ;

(d) la détermination qu'une valeur d'incrément de puissance $\Delta P = |Pt-Pi|$ est ou non inférieure à une valeur prédéfinie $P_{set}$ ; et

(e) la commande du moteur par l'intermédiaire de l'ajustement répété de la puissance et de la vitesse du moteur (1) lorsque la valeur d'incrément de puissance $\Delta P$ est supérieure ou égale à la valeur prédéfinie $P_{set}$ jusqu'à ce que le moteur (1) fonctionne au point de fonctionnement stable et fournisse le débit d'air cible IN-CFM de telle sorte que le débit d'air fourni par le système HVAC soit maintenu constant au débit d'air cible IN-CFM avant et après l'étape de l'ajustement répété de la puissance et de la vitesse du moteur (1), dans lequel l'ajustement répété de la puissance et de la vitesse du moteur (1) comprend l'ajustement de la puissance de moteur et puis ensuite l'ajustement de la vitesse de moteur.

11. Appareil selon la revendication 10, dans lequel la fonction P=f(n) correspondant à un débit d'air cible est obtenue en enregistrant des vitesses de rotation stables et des puissances d'entrée en temps réel correspondantes qui produisent chacun de plusieurs débits d'air cibles couvrant une plage de pression statique réellement appliquée.

12. Appareil selon la revendication 11, dans lequel le processeur configuré pour réaliser l'étape de l'ajustement de la puissance comprend le processeur configuré pour réaliser l'étape de l'ajustement de la vitesse du moteur lorsque la valeur d'incrément de puissance $\Delta P$ est supérieure ou égale à la valeur prédéfinie $P_{set}$ jusqu'à ce que la puissance d'entrée en temps réel Pi du moteur (1) soit au sein de l'intervalle $P_{set}$ de la puissance de point de fonctionnement stable Pt.

13. Appareil selon la revendication 11, dans lequel le processeur est en outre configuré pour réaliser l'étape, si un débit d'air cible IN-CFM entré de façon externe n'est pas égal à un des multiples débits d'air cibles pour lesquels des vitesses de rotation stables et des puissances d'entrée en temps réel correspondantes ont été enregistrées, de l'adaptation et du calcul, par une méthode d'interpolation, d'une fonction P=f(n) correspondant à un quelconque débit d'air cible IN-CFM entré de façon externe.

Air filter

Airflow

Air outlet

Wind wheel

Motor

Air inlet

Airflow

Figure 1

Air outlet area 1

HVAC
system
controller

Motor
controller

M

Air
blower

Filter

Pipe
system

Air outlet area 2

Air outlet area 3

Air outlet area 4

Single motor body

Figure 2

**FIG. 3**

**FIG. 4**

**FIG. 5**

Motor controller

Rectification filter circuit

Voltage stabilizing circuit

Vbus

DC-DC

+15V

+5V

GND

Power supply circuit

AC INPUT

Vbus

Bus voltage detection circuit

Microprocessor

Inverter circuit

Bus current detection circuit

Vbus

Single motor body

M

14

Rotor position measurement circuit

12

N

S

S

N

13

Figure 6

**FIG. 7**

```
                    ┌──────────┐
                    │  Start   │
                    └──────────┘
                         │
                         ▼
            ┌──────────────────────────┐
            │ Receive or preset a      │
            │ target airflow IN-CFM    │
            └──────────────────────────┘
                         │
                         ▼
        ┌──────────────────────────────────┐
        │     Determine or calculate a     │
        │ control track of the function    │
        │ P=F(n) corresponding to the      │
        │ target airflow IN-CFM            │
        └──────────────────────────────────┘
                         │
                         ▼
        ┌──────────────────────────────────┐
        │ Control or start operation of    │
        │ the motor along with the         │
        │ working point (Pt, nt) of the    │
        │ track                            │
        └──────────────────────────────────┘
```

Keep a direct power controlled constant airflow control mode: calculate the real-time input power Pi of the motor according to motor operating parameters, and calculate

$$\Delta P = |Pt - Pi|$$

$\Delta P \geq pset$

No

Yes

Power/speed control logic

Update the working point

Speed control loop
$\Delta n = ni - n * i$

Operating time of speed loop is reached

No

Yes

Figure 8

Power（KW）

Figure 9

Figure 10

Figure 11

*FIG. 12*

Figure 13

Figure 14

**FIG. 15**

Motor controller

Power supply circuit

Rectification filtering circuit

Voltage stabilizing circuit

Vbus

DC-DC

+15V

+5V

GND

AC INPUT

Vbus

Vbus

Bus voltage detection circuit

Microprocessor

Inverter circuit

Phase line current detection circuit

Single motor body M

12

13

Figure 16

FIG. 17

**FIG. 18**

**FIG. 19**

**FIG. 20**

EP 3 104 094 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4806833 A
- US 5736823 A
- JP 2009195065 A
- JP 2013104578 A
- EP 2128977 A